# EUROPÄISCHE PATENTANMELDUNG

(11) **EP 0 548 720 A2**
(43) Veröffentlichungstag der Anmeldung: **30.06.1993**
(21) Anmeldenummer: 92121217.1
(22) Anmeldetag: 12.12.1992
(51) Int. Cl.: A01B 73/04, A01D 78/10, A01D 78/12

(54) **Heuwerbungsmaschine**

(30) Priorität: 21.12.1991 DE 4142496; 02.03.1992 DE 4206503
(71) Anmelder: Maschinenfabriken Bernard Krone GmbH, D-48480 Spelle (DE)
(72) Erfinder: Krone, Bernard, W-4441 Spelle (DE); Kreienbaum, Hubert, W-4424 Stadtlohn (DE); Horstmann, Josef, Dipl.-Ing., W-4530 Ibbenbüren (DE)

(57) **Zusammenfassung**

Es handelt sich um eine Heuwerbungsmaschine, insbesondere eine Schwadmaschine für den Frontanbau an einen Schlepper (1), die aus einer Arbeitslage, welche durch eine gute Bodenanpassung der Rechzinken (124) und eine große Arbeitsbreite gekennzeichnet ist, in eine Transportlage überführt werden kann, in der Unfallrisiken vermieden werden und ein Straßentransport bei guten Sichtverhältnissen für den Schlepperfahrer erfolgen kann, wobei es, um Praxisforderungen zu entsprechen, möglich ist, mit der Schwadmaschine in Verbindung mit zumindest einem, in zwei Drehrichtungen (R1; R2) betreibbaren Rechkreisel (81, 82) unterschiedliche Schwadbilder bei gleich guter Arbeitsqualität und günstigem Verschleißverhalten zu erzeugen.

## Beschreibung

Die Erfindung betrifft eine Heuwerbungsmaschine gemäß dem Oberbegriff des Anspruchs 1.

Es sind Heuwerbungsmaschinen mit mindestens einem Rechkreisel für das Zusammenführen und Schwadlegen von breit liegendem Erntegut bekannt, die front- oder heckseitig an der Dreipunkthebevorrichtung von Schleppern angebaut werden.

An der Frontseite eines Schleppers ist eine Heuwerbungsmaschine anzubauen, die in der DE-A1 41 10 265 beschrieben ist. Dieser Heuwerbungsmaschine ist ein aus zwei Führungslenkern bestehender Tragrahmen zugeordnet, durch den die Maschine vom Schlepper geschoben und seitlich geführt wird. Dabei stützt sich der Maschinenrahmen auf sich selbsttätig der Fahrtrichtung anpassenden Rädern zum Erdboden hin ab. Eines der Räder ist an einem klappbaren Ausleger angelenkt und stützt den Maschinenrahmen vor der Umlaufbahn des Rechkreisels ab. Zur Erreichung einer Transportstellung wird erst dieser Ausleger und dann die gesamte Maschine um horizontale quer zur Fahrtrichtung gelegene Achsen in Richtung des Schleppers nach oben geklappt. In dieser Transportstellung weisen die freien Enden der Rechzinken in Fahrtrichtung, was gewisse Unfallrisiken in sich birgt. Das Gehäuse des Kreisels ist in der Transportstellung in der Fahrzeugmitte gelegen, woraus geringe Sichtbehinderungen für den Schlepperfahrer resultieren. Um die Arbeitsbreite der Heuwerbungsmaschine vergrößern zu können, müßten beispielsweise zwei Rechkreisel vorgesehen werden. Dann ist eine so gestaltete Maschine nicht mehr für den Straßentransport geeignet, da die Transportbreite zu groß wäre. Die Zinkenarme müßten abgebaut werden, was nur mit großem Aufwand an Arbeitszeit möglich ist.
Der Rechkreisel der Heuwerbungsmaschine nach der DE-A1 41 10 265 ist nur in einer Drehrichtung betreibbar, wodurch die Ablagerichtung von Erntegut festgelegt ist.

Es sind Rechkreisel bekannt, deren Kreiselräder, an denen Zinkenarme gelagert sind, in ihrer Drehrichtung umkehrbar sind, um verschiedene Arbeitsaufgaben erfüllen zu können. Solche Rechkreisel weisen Zinkenarme auf, die mit den an ihnen gehalterten Zinken gesteuert um ihre Längsachsen verschwenkbar sind. Diese Steuerung erfolgt während der Drehbewegung über Kurvenbahnen.

Rechkreisel dieser Art sind beispielsweise in der DE-C2 35 29 771 beschrieben. Hier sind zwei Rechkreisel einer Heuwerbungsmaschine mit radial von den Drehachsen der Rechkreisel abweisenden Zinkenarmen in entgegengesetztem Drehsinn angetrieben. Die Drehrichtung beider Rechkreisel ist gleichzeitig umkehrbar. Um bei beiden Drehrichtungen eine gleiche Arbeitsqualität zu erreichen, sind die Zinkenarme zwischen beiden Rechkreiseln austauschbar. Es ist also ein Satz Zinkenarme für Rechtsdrehung und ein Satz für Linksdrehung vorhanden, die entsprechend der Drehrichtung der Rechkreisel umtauschbar Verwendung finden. Dieser Aufwand wird betrieben, um unabhängig von der Drehrichtung gezogene Zinken einzusetzen, da bekannt ist, daß mit vertikalen Zinken, die in beiden Drehrichtungen betrieben werden, keine gute Arbeitsqualität erreichbar ist und häufig Zinkenbrüche auftreten. Günstig gestaltete Zinken weisen Federspeicher auf, wobei diese nur in einer Richtung optimal einsetzbar sind. Bei Heuwerbungsmaschinen, die nur einen Rechkreisel aufweisen bzw. nur die Drehrichtung eines Rechkreisels verändert werden soll, kann die in der DE-C2 35 29 771 aufgezeigte Lösung nicht zur Anwendung kommen. Ein weiterer Nachteil dieser Lösung besteht in der radialen Ausrichtung der Zinkenspitzen, wodurch nur ein Teil der erreichbaren Fläche auf dem Erdboden von den Zinken überstrichen wird.

Es ist Aufgabe der Erfindung, eine Heuwerbungsmaschine, insbesondere ein Schwadmaschine für den Frontanbau an einen Schlepper zu schaffen, die aus einer Arbeitslage, die durch gute Bodenanpassung der Rechzinken und große Arbeitsbreite gekennzeichnet ist, in eine Transportlage bringbar ist, in der Unfallrisiken vermieden werden und ein Straßentransport bei guten Sichtverhältnissen für den Schlepperfahrer erfolgen kann. Darüber hinaus soll es mit der Schwadmaschine möglich sein, unterschiedliche Schwadbilder zu formen, ohne daß ihre gute Arbeitsqualität und ein günstiges Verschleißverhalten gemindert wird.

Zur Lösung dieser Aufgabe zeichnet sich die Heuwerbungsmaschine nach der Erfindung durch die im kennzeichnenden Teil des Anspruchs 1 angegebenen Merkmale aus. Hinsichtlich wesentlicher weiterer Merkmale wird auf die Ansprüche 2 bis 19 verwiesen.

Die Heuwerbungsmaschine ist mit zwei im Betrieb um etwa vertikale Achsen rotierenden Rechkreiseln ausgerüstet. Durch Rechzinken wird breitgestreutes, auf der Feld- bzw. Wiesenfläche liegendes Erntegut zusammengeführt und in Schwaden abgelegt. Dies ist mit der erfindungsgemäßen Heuwerbungsmaschine bei großer Arbeitsbreite und guter Bodenanpassungsfähigkeit der Rechzinken möglich.

Gehäuse der Rechkreisel sind fest mit Tragholmen verbunden, wobei eine Achse der Tragholme etwa rechtwinklig zu der jeweiligen Drehachse der Rechkreisel steht. Die beiden Tragholme weisen mit ihren Achsen in einer Arbeitslage der Heuwerbungsmaschine in Fahrtrichtung und sind mit ihren noch freien Enden seitlich an einem Querholm gelagert. Die Achsen beider Tragholme schneiden sich mit einer Achse des Querholmes.

Die Gehäuse der Rechkreisel und der Querholm bzw. die querholmnahen Enden der Tragholme stützen sich in den Arbeitslagen der Heuwerbungsmaschine auf Stützrädern zum Erdboden hin ab. Die Stützhöhe der Stützräder ist einstellbar und ihre Laufrichtung paßt sich selbsttätig der Fahrtrichtung an. Dies wird vorteilhaft realisiert, indem die Stützräder an höhenverstellbaren Haltearmen gelagert sind, welche um etwa vertikale Halteachsen verschwenkbar sind, wobei die Stützräder diesen Halteachsen nacheilen. Es können jeweils zwei separat gehalterte Stützräder je Rechkreisel aber auch Stützräder an Pendelachsen, wie beispielsweise in der DE-C1 40 13 789 beschrieben, Anwendung finden.

Eine optimale Bodenanpassung der Rechzinken beider Rechkreisel erfolgt, indem die Rechkreisel einerseits um die Achsen der Tragholme verdrehbar, andererseits gemeinsam mit den zugehörigen Tragholmen einzeln um die Achse des Querholmes verschwenkbar sind und indem der Querholm um zumindest eine etwa in Fahrtrichtung liegende Achse begrenzt verschwenkbar an der Dreipunkthebevorrichtung eines Schleppers gehaltert ist. Letzteres erfolgt vorteilhaft, indem die Unterlenker der Dreipunkthebevorrichtung in Langlöchern eines Anbaudreiecks gehaltert sind. Der an dem Anbaudreieck über einen Tragrahmen gelagerte Querholm, bleibt so begrenzt schwenkbeweglich.

Eine Transportlage der Heuwerbungsmaschine ist erreichbar, indem die Tragholme mit den daran gehalterten Rechkreiseln ausgehoben werden und um die Achse des Querholms nach oben in Richtung Schlepper verschwenkt werden, bis sie etwa senkrecht oder leicht in Richtung Schlepper geneigt stehen. Weiterhin werden die Tragholme mit den Rechkreiseln zur Erreichung der Transportlage um etwa 90 Grad um die Achsen der Tragholme verdreht, so daß die freien Enden der Rechzinken in Richtung der Fahrzeugmitte weisen. Somit befinden sich die Gehäuse der Rechkreisel nicht in der Fahrzeugmitte und beeinträchtigen die Sicht des Schlepperfahrers nicht. Die Rechzinken stellen kein Unfallrisiko dar, da diese zur Fahrzeugmitte weisen und nicht nach außen oder in Fahrtrichtung. Die Gehäuse der Rechkreisel und die Recharme decken die Rechzinken nach links und rechts ab. Weiterhin ist in der Transportlage der Heuwerbungsmaschine der Schwerpunkt der Rechkreisel sehr nahe am Schlepper gelegen, da die Rechkreisel so verschwenkt bzw. verdreht werden, daß sie sich teilweise über den Vorderrädern des Schleppers befinden. Durch diese Ausführung der Heuwerbungsmaschine ist das Schwadlegen bei sehr guter Bodenanpassung der Rechzinken und großer Arbeitsbreite möglich, ohne daß das Halmgut von Rädern überrollt wird, und ein gefahrloser Straßentransport der Heuwerbungsmaschine kann erfolgen.

Zur Einstellung verschiedener Arbeitspositionen der Heuwerbungsmaschine ist ihr Tragrahmen so gestaltet, daß der daran gehalterte Maschinenrahmen um eine etwa vertikale Achse relativ zum Schlepper verschwenkbar ist. Die Rechkreisel können (bei Sicht in Fahrtrichtung) entweder nebeneinander angeordnet sein oder nach Verschwenken des Maschinenrahmens versetzt zueinander mit sich überlappenden Arbeitsflächen betrieben werden. Zumindest ein Rechkreisel ist in der Drehrichtung umkehrbar, wobei er in beiden Drehrichtungen mit gleicher Arbeitsqualität arbeitet. Damit ist es möglich, bei nebeneinander angeordneten Rechkreiseln je nach vorgewählter Drehrichtung der Rechkreisel entweder ein Mittelschwad zwischen den Rechkreiseln zu formen oder durch jeden Rechkreisel ein Einzelschwad abzulegen. Bei in und quer zur Fahrtrichtung versetzten und gleichsinnig rotierenden Rechkreiseln kann ein Seitenschwad erzeugt werden, indem vom vorderen Rechkreisel zusammengeharktes Erntegut von dem zweiten Rechkreisel übernommen und gemeinsam mit weiterem auf der Feldfläche liegendem Erntegut dann von diesem seitlich abgelegt wird. Ein um eine vertikale Achse verschwenkbar am Tragrahmen gelagerter Querholm des Maschinenrahmens stützt sich über Anschläge am Tragrahmen ab, wobei Schwenkbewegungen durch die Kraft einer Kolben-Zylinderanordnung, die mit der Hydraulikanlage des Schleppers verbunden und über ein Ventil ansteuerbar ist, erfolgen.

Der Antrieb der Rechkreisel erfolgt von der Frontzapfwelle des Schleppers aus über eine Weitwinkelgelenkwelle und ein Getriebe, das die Leistung auf Wellen im Querholm verteilt. Diese sind über Kegelradverzahnungen mit Wellen in den Tragholmen verbunden, wobei die Verzahnungsmittelpunkte sich auf den Schnittpunkten der Achsen der Tragholme mit der Achse des Querholmes befinden. Somit sind alle Schwenk- und Drehbewegungen ausführbar, ohne den Kraftfluß unterbrechen zu müssen.

Die Arbeitsbreite der Heuwerbungsmaschine kann einstellbar sein, indem die Länge des Querholmes veränderbar ist. Der Querholm und die in ihm gelagerten Antriebswellen müssen dann teleskopartig ausgeführt sein. Die Verstellung der Länge des Querholmes und damit des Abstandes der Tragholme von der Fahrzeugmitte erfolgt dann durch die Kraft von Kolben-Zylinderanordnungen.

Weitere Kolben-Zylinderanordnungen finden Verwendung, um die Schwenkbewegungen der Tragholme aus der Arbeitslage in die Transportlage zu ermöglichen. Alle Kolben-Zylinderanordnungen sind mit der Hydraulikanlage des Schleppers verbunden und über Ventile ansteuerbar.

Der in seiner Drehrichtung umkehrbare Rechkreisel weist ebenfalls vorteilhafte Merkmale auf, durch die erreicht wird, daß in absolut gleicher Qualität gearbeitet wird, unabhängig in welchem Drehsinn er rotiert. Dieser Rechkreisel ist mit tangential an einem Kreiselrad lösbar gehalterten Zinkenarmen ausgerüstet, an denen nachlaufend gezogene Zinken befestigt sind. Das Kreiselrad mit den Zinkenarmen rotiert im Betrieb um eine etwa vertikale Achse, wobei die Zinkenarme mit den Zinken gleichzeitig gesteuerte Bewegungen um Längsachsen der Zinkenarme ausführen. Diese Bewegung wird über eine Kurvenbahn gesteuert, und es wird erreicht, daß sich die Zinken nur innerhalb eines bestimmten Abschnittes ihrer Umdrehung in einer Rechposition befinden. Alle dazu erforderlichen Steuerungsteile sind symmetrisch zu Radialen angeordnet, welche rechtwinklig zu den Längsachsen der Zinkenarme ausgerichtet sind. Dadurch erfolgt in beiden Drehrichtungen eine gleiche Steuerung der Zinkenbewegung. Zur Feineinstellung der Zeit, in der sich die Zinken in ihrer Rechposition befinden, ist die ebenfalls symmetrische Kurvenbahn begrenzt um die Achse verschwenkbar, um die das Kreiselrad rotiert. Erfolgt eine Umkehr der Drehrichtung des Rechkreisels, werden die Zinkenarme vom Kreiselrad gelöst und spiegelbildlich zu der genannten Radialen wieder montiert. Dazu sind die Zinkenarme beispielsweise zweiteilig ausgelegt. Sie bestehen aus einem Zwischenstück, das am Kreiselrad zu halten ist, und aus einem Zinkenhalteteil, das lösbar am Zwischenstück so anzustecken ist, daß die Zinken immer der Längsachse des Zinkenarme nachlaufen und ihre Federspeicher nur in der Rollrichtung der Windungen belastet werden. Der Umbauaufwand ist gering, und der Rechkreisel ist damit vollwertig in beiden Drehrichtungen einsetzbar.
Es ist auch möglich, den Rechkreisel mit zwei verschiedenen Sätzen von einteiligen Zinkenarmen auszurüsten, wobei ein Satz für Linksdrehung und ein Satz für Rechtsdrehung des Kreiselrades bestimmt ist und so immer mit gezogenen Zinken gearbeitet werden kann. Im weiteren könnten auch Zinkenarme mit vertikalen Zinken, die für beide Drehrichtungen geeignet sind, zum Einsatz kommen. Diese Zinkenarme müßten dann nur der vorgewählten Drehrichtung entsprechend am Kreiselrad gehaltert werden. Hier sind aber funktionelle Nachteile gegenüber gezogenen Zinken zu erwarten.
Um eine möglichst große Arbeitsfläche mit den Zinkenspitzen überstreichen zu können, ist deren Lage zur Achse des Rechkreisels bedeutend. Optimal ist, wenn nicht alle Zinkenspitzen der Zinken eines Zinkenarmes auf einer Radialen liegen sondern eine durch diese Zinkenspitzen gelegte Gerade einen Winkel von 10 Grad bis 30 Grad, vorzugsweise 20 Grad, mit einer Geraden bildet, die durch die Achse des Kreiselrades und die äußerste Zinkenspitze verläuft.

Die detaillierte Beschreibung der Erfindung erfolgt an Hand von Ausführungsbeispielen. In den dazugehörigen Zeichnungen stellen im einzelnen dar:
- Fig. 1:: eine schematische Draufsicht auf eine erfindungsgemäße Heuwerbungsmaschine im Frontanbau an einen Schlepper mit in Arbeitslage befindlichen Rechkreiseln;
- Fig. 2:: eine Seitenansicht nach Fig. 1 bei sich in Transportlage befindlicher Heuwerbungsmaschine;
- Fig. 3:: Detail U aus Fig. 1 in vergrößertem Maßstab;
- Fig. 4:: Detail V aus Fig. 1 in schematischer, teilweise geschnittener und maßstäblich vergrößerter Darstellungsweise;
- Fig. 5:: die gelenkige Verbindung zwischen Querholm und Tragholm in einer schematischen Seitenansicht;
- Fig. 6:: Detail W aus Fig. 1 in vergrößertem Maßstab;
- Fig. 7:: ein Eckteil zur Verbindung des Querholmes mit einem Tragholm in einem weiteren Ausführungsbeispiel der Erfindung in schematischer Darstellungsweise;
- Fig. 8:: eine schematische Draufsicht auf eine Heuwerbungsmaschine anderer Ausführung in einer Arbeitsposition zur Ablage eines Mittelschwades;
- Fig. 9:: die Heuwerbungsmaschine nach Fig. 8 in einer Arbeitsposition zur Ablage von Seitenschwaden;
- Fig. 10:: Detail X aus Fig. 9 in vergrößertem Maßstab;
- Fig. 11:: eine Seitenansicht eines in zwei Drehrichtungen betreibbaren Rechkreisels, teilweise im Schnitt dargestellt;
- Fig. 12:: eine Schnittdarstellung nach Linie XII - XII in Fig. 11;
- Fig. 13:: Detail Y aus Fig. 12 in vergrößertem Maßstab;
- Fig. 14:: Detail Z aus Fig. 12 in vergrößertem Maßstab in beiden möglichen Montagevarianten;
- Fig. 15:: eine Schnittdarstellung nach Linie XV - XV in Fig. 14;
- Fig. 16:: eine Schnittdarstellung nach Linie XVI - XVI in Fig. 15.

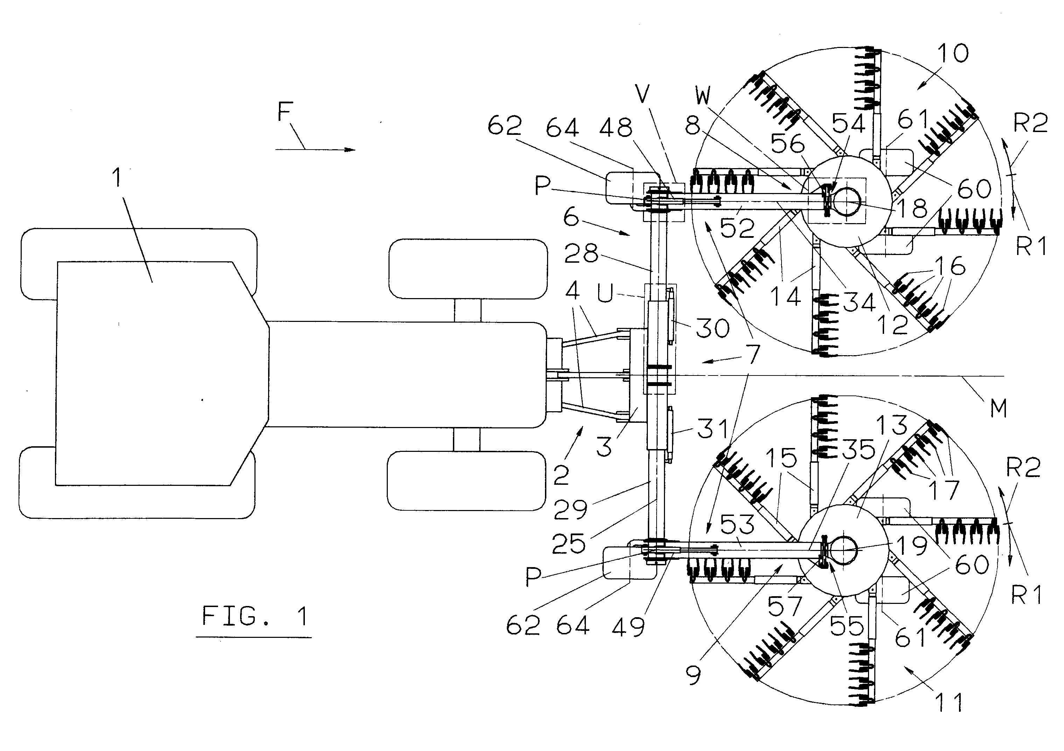

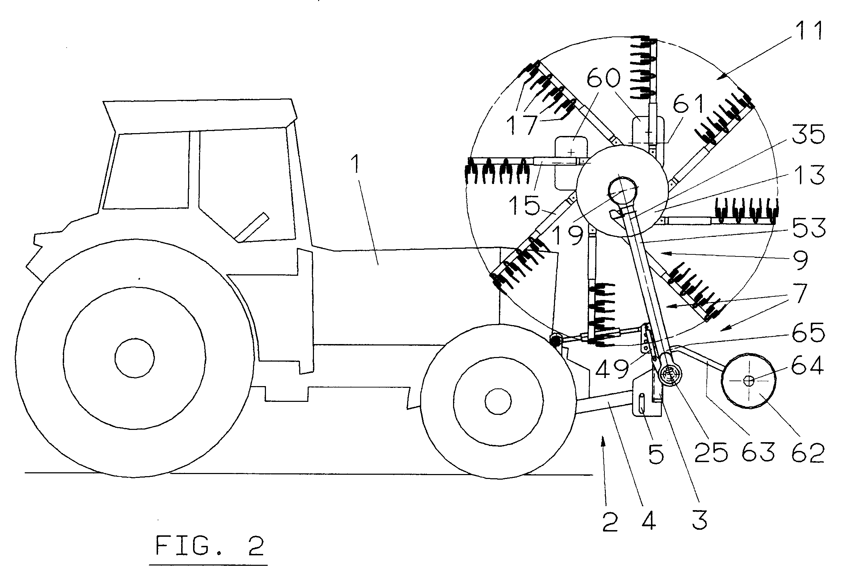

In den Fig. 1 und 2 ist der Grundaufbau einer Heuwerbungsmaschine nach der Erfindung verdeutlicht. An einem Schlepper 1 mit Dreipunkthebevorrichtung 2 ist ein Tragrahmen 3 der Heuwerbungsmaschine gehaltert, wobei Unterlenker 4 der Dreipunkthebevorrichtung 2 in Langlöchern 5 des Tragrahmens 3 begrenzt verschiebbar und verschwenkbar sind. Am Tragrahmen 3 ist ein Querholm 6 eines Maschinenrahmens 7 fest verschweißt. Der Maschinenrahmen 7 umfaßt neben dem Querholm 6 noch zwei Tragholme 8, 9, die an beiden Enden des Querholmes 6 gelagert sind. Der Tragrahmen 3 ist gemeinsam mit dem Maschinenrahmen 7 relativ zum Schlepper 1 begrenzt schwenkbeweglich, was durch die Befestigung der Unterlenker 4 in den Langlöchern 5 bewirkt wird.

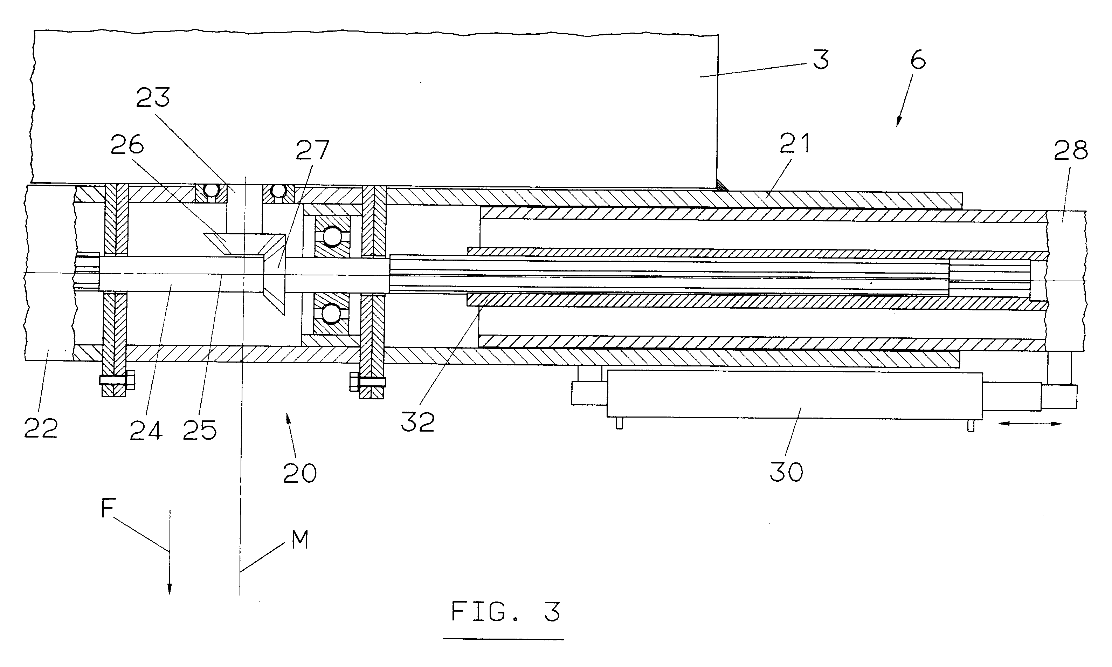

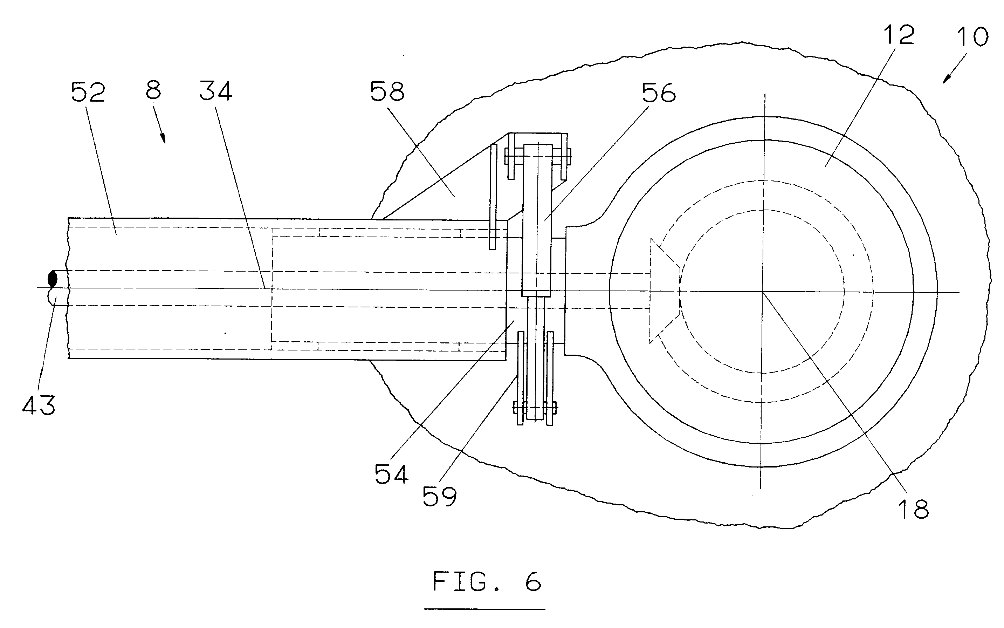

Bei einer nicht dargestellten Ausführungsform der Heuwerbungsmaschine könnte auch der Tragrahmen 3 fest an der Dreipunkthebevorrichtung 2 des Schleppers 1 gehaltert werden. Um die gewünschte Schwenkbeweglichkeit des Maschinenrahmens 7 relativ zum Schlepper 1 zu erreichen, könnte in diesem Falle der Maschinenrahmen 7 beispielsweise um eine in Fahrtrichtung F weisende Achse verschwenkbar am Tragrahmen 3 gelagert sein. Eine weitere nutzbare Variante des Tragrahmens 3 als Baugruppe zur Verbindung zwischen einem Schlepper 1 und einer Heuwerbungsmaschine könnte auch wie in der DE-A1 41 10 265 ausgeführt werden.
An den Tragholmen 8, 9 ist jeweils ein Rechkreisel 10, 11 fest gehaltert. Die Rechkreisel 10, 11 umfassen jeweils ein Gehäuse 12, 13, ein nur in Fig. 6 angedeutetes Getriebe, Zinkenarme 14, 15 und Rechzinken 16, 17. Die Zinkenarme 14, 15 mit den Rechzinken 16, 17 rotieren in Arbeitslage der Heuwerbungsmaschine um etwa vertikale Achsen 18, 19 der Rechkreisel 10, 11, wobei sie dabei zusätzlich gesteuerte Bewegungen ausführen. In Fig. 3 ist der Aufbau des Querholmes 6 schematisch verdeutlicht. In der Maschinenmitte M ist ein Getriebe 20 in Mittelteile 21, 22 des Querholmes 6 integriert. Das Getriebe 20 weist eine Eingangswelle 23 auf, die endseitig mit einem nicht in der Zeichnung dargestellten Vielkeilprofil versehen ist und durch eine Gelenkwelle mit der Zapfwelle des Schleppers 1 verbindbar ist. Eine Getriebeausgangswelle 24 ragt beidseitig aus dem Getriebe 20 heraus in die Mittelteile 21, 22 des Querholmes 6 hinein. Sie ist koaxial zu einer Achse 25 des Querholmes 6 gelagert und wird über Kegelräder 26, 27 von der Eingangswelle 23 aus angetrieben. Die Mittelteile 21, 22 des Querholmes 6 sind am Tragrahmen 3 der Heuwerbungsmaschine verschweißt. In die äußeren Enden der Mittelteile 21, 22 sind Außenteile 28, 29 des Querholmes 6 teleskopartig eingeschoben. Vorzugsweise bestehen die Mittelteile 21, 22 und die Außenteile 28, 29 aus Profilrohr, so daß ein Verdrehen der Außenteile 28, 29 relativ zu den Mittelteilen 21, 22 um die Achse 25 nicht möglich ist. Jedes Außenteil 28, 29 wird durch eine Kolben-Zylinderanordnung 30, 31 im Mittelteil 21, 22 gehalten. Die Kolben-Zylinderanordnungen 30, 31 sind mit der Hydraulikanlage des Schleppers 1 verbunden und einzeln über Ventile ansteuerbar. Durch ihre Kraft können die Außenteile 28, 29 des Querholmes 6 in den Mittelteilen 21, 22 in Richtung der Achse 25 verschoben werden, was eine Änderung der Maschinenbreite zur Folge hat. Die Verschiebbarkeit der Außenteile 28, 29 wird durch die jeweiligen Endstellungen der Kolben-Zylinderanordnungen 30, 31 begrenzt.

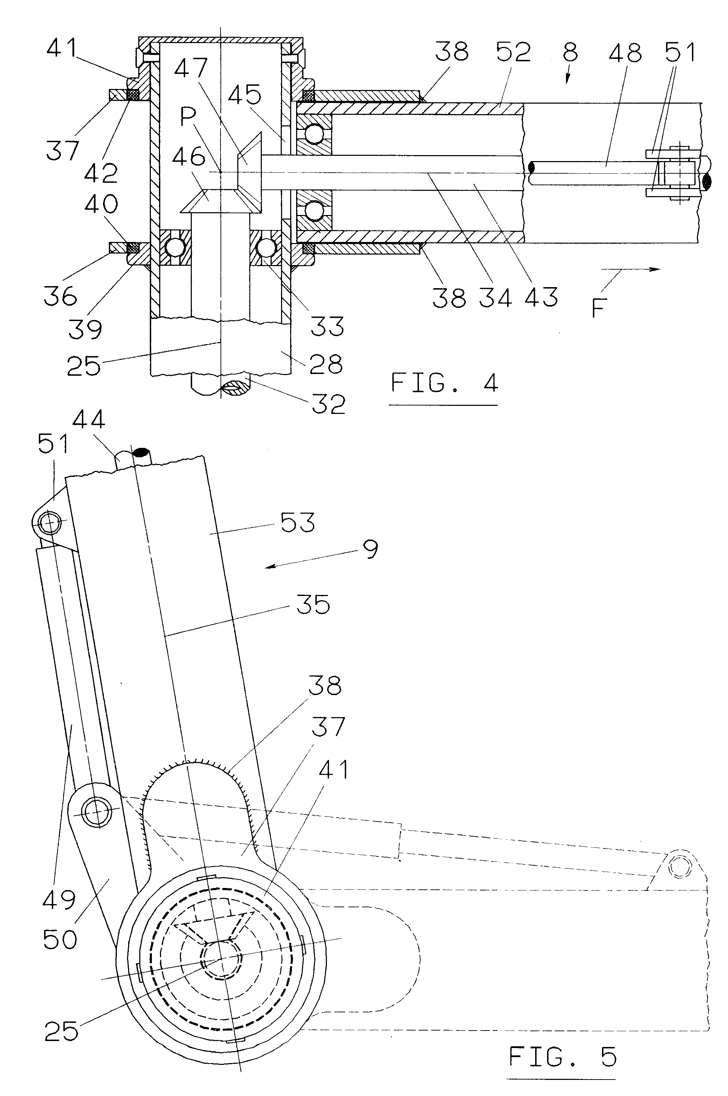

Die in den Mittelteilen 21, 22 befindlichen Enden der Ausgangswelle 24 sind profiliert. Auf diesem Profil sind Hohlwellen 32 verschiebbar, durch die die Leistung zu den Enden der Außenteile 28, 29 des Querholmes 6 übertragen wird. Dort sind Lagerstellen 33 (Fig.4) vorhanden, durch die die Hohlwellen 32 um die Achse 25 drehbar, aber nicht in den Außenteilen 28, 29 verschiebbar gehaltert werden. Somit hat eine Längenänderung des Querholmes 6 auch eine Verschiebung der Hohlwellen 32 auf den Enden der Ausgangswelle 24 zur Folge.

In den Fig. 4 und 5 ist die Verbindung des Querholmes 6, speziell seiner Außenteile 28, 29, mit den Tragholmen 8, 9 verdeutlicht. Die Tragholme 8, 9 sind auf den Enden der Außenteile 28, 29 um die Achse 25 verschwenkbar gelagert. Vorzugsweise bestehen die Tragholme 8, 9 ebenfalls aus Rohr. Achsen 34, 35 der Tragholme 8, 9 weisen in Arbeitslage der Heuwerbungsmaschine etwa in Fahrtrichtung F. Diese Achsen 34, 35 schneiden sich mit der Achse 25 des Querholmes 6 in Punkten P. An jedem Tragholm 8, 9 sind zwei Lageraugen 36, 37 verschweißt, wobei die Schweißnähte unter 38 in den Zeichnungen angedeutet sind. Am jeweiligen Außenteil 28, 29 ist ein Lagersitz 39 verschweißt, auf dem ein mit einem Lagerring 40 versehenes Lagerauge 36 um die Achse 25 verschwenkbar gehaltert ist. Ein zweiter Lagersitz 41, der gleichzeitig den Abschluß des jeweiligen Außenteils 28, 29 bildet, wird auf das Außenteil 28, 29 geschoben und an diesem verschraubt. Auf diesem Lagersitz 41 befindet sich ein weiterer Lagerring 42 und das zweite Lagerauge 37 des Tragholmes 8, 9. Im Tragholm 8, 9 ist eine Antriebswelle 43, 44 koaxial zu der jeweiligen Achse 34, 35 gelagert. Die Antriebswellen 43, 44 ragen durch Ausnehmungen 45 bis in die Enden der Außenteile 28, 29 des Querholmes 6 hinein. Dort bestehen durch Kegelräder 46, 47 Verbindungen zwischen den Hohlwellen 32 und den Antriebswellen 43, 44.
Die Verzahnungsmittelpunkte der Kegelräder 46, 47 werden ebenfalls durch die Punkte P gebildet. Wie speziell in Fig. 5 verdeutlicht ist, sind die Tragholme 8, 9 um die Achse 25 um etwa 100 Grad bis 120 Grad verschwenkbar. Dazu sind Kolben-Zylinderanordnungen 48, 49 vorgesehen, die zwischen Haltern 50 des Querholmes 6 und Haltern 51 der Tragholme 8, 9 schwenkbeweglich befestigt sind. Die Kolben-Zylinderanordnungen 48, 49 sind mit der Hydraulikanlage des Schleppers 1 verbunden. Bei Verkürzung ihrer Länge nach Ventilbetätigung werden die Tragholme 8, 9 mit den Rechkreiseln 10, 11 ausgehoben und in Richtung Schlepper 1 in die Transportlage verschwenkt.

Die Tragholme 8, 9 sind im Ausführungsbeispiel zweiteilig gestaltet, was speziell aus Fig. 6 deutlich wird. Die ersten Teile 52, 53 sind, wie bereits beschrieben, an dem Querholm 6 gelagert. Die zweiten Teile 54, 55, an denen die Gehäuse 12, 13 der Rechkreisel 10, 11 fest gehaltert sind, sind in den ersten Teilen 52, 53 der Tragholme 8, 9 um die Achsen 34, 35 begrenzt verdrehbar gelagert. Diese Lagerung wurde in Fig. 6 nur angedeutet. Durch sie wird gewährleistet, daß nur eine Verdrehung um die Achsen 34, 35, nicht aber eine Verschiebung der zweiten Teile 54, 55 relativ zu den ersten Teilen 52, 53 in Richtung der Achsen 34, 35 möglich ist. Die Drehbewegung der zweiten Teile 54, 55 um die Achsen 34, 35 wird durch die Kraft von Kolben-Zylinderanordnungen 56, 57 bewirkt, die zwischen Laschen 58 der ersten Teile 53, 53 und Laschen 59 der zweiten Teile 54, 55 schwenkbeweglich gehaltert sind. Sie kann ebenfalls um etwa 100 Grad erfolgen, wobei diese Drehbewegung erst dann vorgenommen wird, wenn die Tragholme 8, 9 mit den Rechkreiseln 10, 11 ausgehoben und schon teilweise nach oben verschwenkt wurden. Durch eine hydraulische Folgeschaltung erfolgt dann die Drehbewegung der zweiten Teile 54, 55 mit den Rechkreiseln 10, 11 um die Achsen 34, 35 gleichzeitig mit der Schwenkbewegung um die Achse 25, so daß nach Abschluß dieser Bewegungen die Tragholme 8, 9 senkrecht oder leicht in Richtung des Schleppers 1 geneigt stehen und die freien Enden der Rechzinken 16, 17 zu einer in der Maschinenmitte M gelegenen senkrechten Ebene weisen. Damit befinden sich die in der Arbeitslage etwa vertikalen Achsen 18, 19 der Rechkreisel 10, 11 in der Transportlage in einer quer zur Fahrtrichtung F ausgerichteten etwa horizontalen Lage.

Die Antriebswellen 43, 44 sind auch in den zweiten Teilen 54, 55 der Tragholme 8, 9 gelagert und ragen bis in die Gehäuse 12, 13 der Rechkreisel 10, 11 hinein. Dort treiben sie über in Fig. 6 nur angedeutete Kegelräder die Zinkenarme 14, 15 mit den Rechzinken 16, 17 an. Die Gehäuse 12, 13 der Rechkreisel 10, 11 stützen sich in der Arbeitslage der Heuwerbungsmaschine auf jeweils zwei Stützrädern 60 innerhalb der Umlaufbahnen der Rechzinken 16, 17 zum Erdboden hin ab. Die Stützräder 60 jedes Rechkreisels 10, 11 sind den konstruktiven Möglichkeiten entsprechend so weit wie möglich voneinander entfernt und so weit wie möglich vor der jeweiligen vertikalen Achse 18, 19 der Rechkreisel 10, 11 anzuordnen. Sie werden an nicht in den Zeichnungen verdeutlichten Haltearmen so gelagert, daß sich ihre Laufrichtung der Fahrtrichtung F selbsttätig anpaßt. Dies erfolgt in bekannter Weise, indem die Drehachsen 61 der Stützräder 60 etwa vertikalen Halteachsen, um die die Stützräder 60 verschwenkbar sind, nachgeordnet sind.

In anderer Ausführung der Heuwerbungsmaschine sind auch vier Stützräder je Rechkreisel 10, 11 nutzbar, wobei die Stützräder dann paarweise pendelnd, wie in der DE-C1 40 13 789 beschrieben, aufgehängt sein können.

Durch jeweils ein weiteres Stützrad 62 werden die querholmnahen Enden der Tragholme 8, 9, speziell ihrer ersten Teile 52, 53, abgestützt. Sie sind ebenfalls an Haltearmen 63 um Achsen 64 drehbeweglich gelagert und ihre Laufrichtung paßt sich selbsttätig der Fahrtrichtung F an, indem die Haltearme 63 um Achsen 65 verschwenkbar an den ersten Teilen 52, 53 der Tragholme 8, 9 gelagert sind. In der Arbeitslage der Heuwerbungsmaschine sind die Achsen 64 den Achsen 65 nachgeordnet. Wird die Heuwerbungsmaschine in die Transportlage gebracht, verschwenken die Haltearme 63 gemeinsam mit den Stützrädern 62 ebenfalls um die Achse 25.

Alle Stützräder 60, 62 sind in ihrer Stützhöhe einstellbar, was nicht in den Zeichnungen verdeutlicht wurde. Je Rechkreisel 10, 11 bilden zwei Stützräder 60 und ein Stützrad 62 ein Dreieck, wodurch eine gute Bodenanpassung der Rechzinken 16, 17 gewährleistet wird. Bodenanpassungsbewegungen der Rechkreisel 10, 11 sind um die Achsen 34, 35 und um die Achse 25 möglich, wozu im Betrieb der Heuwerbungsmaschine die Kolben-Zylinderanordnungen 48, 49 und 56, 57 in Schwimmstellung geschaltet werden. Weiterhin von Bedeutung für eine gute Bodenanpassung der Rechzinken 16, 17 ist die Beweglichkeit des Querholmes 6 relativ zum Schlepper 1, die eingangs beschrieben wurde. Der Querholm 6 wird durch die Stützräder 62 etwa parallel zum Erdboden gehalten.

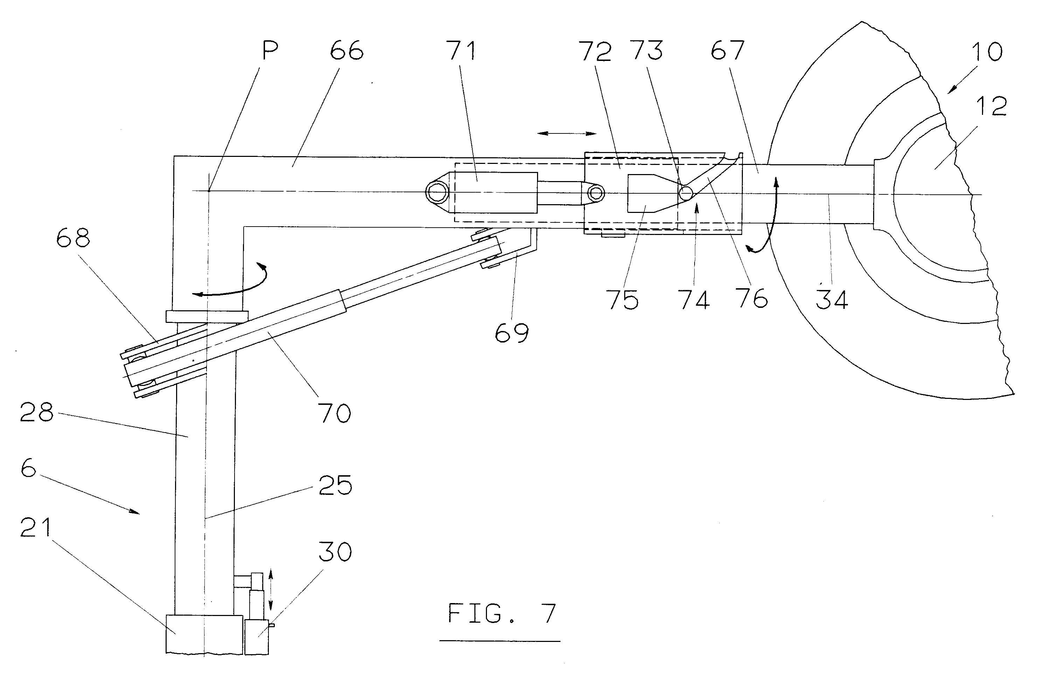

Ein anderes Ausführungsbeispiel einer Heuwerbungsmaschine nach der Erfindung ist in Fig. 7 schematisch verdeutlicht. Es kommen hier Eckteile 66 als Lagerteile zur Anwendung, die um die Achse 25 verschwenkbar auf den Außenteilen 28, 29 des Querholmes 6 und in denen Tragholme 67 um die Achsen 34, 35 verdrehbar gelagert sind. Somit ist hier die Lagerung der Tragholme 67 anders gestaltet als die der Tragholme 8, 9 im ersten, ausführlich beschriebenen Ausführungsbeispiel.

Zwischen Haltern 68 der Außenteile 28, 29 des Querholmes 6 und Haltern 69 der Eckteile 66 sind Kolben-Zylinderanordnungen 70 vorgesehen, durch deren Kraft die Eckteile 66 mit den Tragholmen 67 und den Rechkreiseln 10, 11 um die Achse 25 nach oben verschwenkt werden. Für das Verdrehen der Tragholme 67 mit den Rechkreiseln 10, 11 um die Achsen 34, 35 sind Kolben-Zylinderanordnungen 71 vorgesehen, durch deren Kraft Kulissenteile 72 in Richtung der Achsen 34, 35 bewegt werden. Dabei wird das jeweilige Kulissenteil 72 auf einem Abschnitt des Eckteils 66 verschiebbar aber drehfest gehaltert. Es ragt über das Ende des Eckteils 66 hinaus und umgreift dort den jeweiligen Tragholm 67 auf einem Teil seiner Länge. Ein am Tragholm 67 verschweißtes Führungsteil 73 ragt vom Tragholm 67 aus in eine Kulissenbahn 74 des Kulissenteils 72. Die Kulissenbahn 74 weist eine Zone 75 auf, in der das Führungsteil 73 mit viel Spiel umgriffen wird.
Wird das Kulissenteil 72 so in Richtung des jeweiligen Rechkreisels 10, 11 verschoben, daß sich das Führungsteil 73 in dieser Zone 75 befindet, kann der jeweilige Tragholm 67 mit dem Rechkreisel 10, 11 Drehbewegungen um die Achse 34, 35 ausführen, wobei die Beweglichkeit des Führungsteils 73 in der Zone 75 diese Drehbewegungen begrenzt. Die Kulissenbahnen 74 werden im weiteren durch spiralförmige Ausnehmungen 76 in den Kulissenteilen 72 gebildet, die sich an die Zonen 75 anschließen und um etwa 90 Grad des Umfangs der Kulissenteile 72 winden. Diese Ausnehmungen 76 haben eine solche Breite, daß die Führungsteile 73 mit wenig Spiel umgriffen werden, wenn die Kulissenteile 72 in Richtung des Querholmes 6 verschoben werden. Diese Verschiebung hat zur Folge, daß die Tragholme 67 mit den Rechkreiseln 10, 11 um die Achsen 34, 35 verdreht werden, in einer Weise, wie dies im ersten Ausführungsbeispiel der Erfindung beschrieben wurde. Die weitere Ausgestaltung dieses Ausführungsbeispiels ist der des ersten Ausführungsbeispiels der Erfindung gleich.

Durch die so vorteilhaft gestalteten Heuwerbungsmaschinen kann auf der Feld- bzw. Wiesenfläche liegendes, breitgestreutes Erntegut zu Schwaden zusammengeführt werden. Die Heuwerbungsmaschinen weisen eine große Arbeitsbreite auf, die variabel ist, was durch die Veränderbarkeit der Länge des Querholmes 6 erreicht wird. Bei der Arbeit hat der Schlepperfahrer sehr gute Sichtverhältnisse, Erntegut wird nicht von den Rädern des Schleppers 1 überrollt, und es ist eine sehr gute Arbeitsqualität erreichbar. In der Transportlage der Heuwerbungsmaschinen ragen die Achsen 34, 35 der Tragholme 8, 9, 67 von den Punkten P aus nach oben, wobei sie leicht in Richtung Schlepper 1 geneigt sind. Die Rechkreisel 10, 11 sind um die Achsen 34, 35 so verdreht, daß die freien Enden der Rechzinken 16, 17 weder nach außen oder in Fahrtrichtung F, wie bei bekannten Heuwerbungsmaschinen, sondern zu einer senkrechten Fahrtrichtungsmittelebene weisen. Somit schirmen die Zinkenarme 14, 15 und die Gehäuse 12, 13 eines Rechkreisels 10, 11 jeweils die freien Enden der Rechzinken 16, 17 des anderen Rechkreisels 11, 10 ab. Eine Unfallgefährdung durch die Rechzinken wird hier dadurch vermieden.

Weiterhin bestehen auch in der Transportlage der Heuwerbungsmaschinen gute Sichtverhältnisse für den Schlepperfahrer, da die Maschinenmitte M im Sichtbereich frei von Bauteilen ist. Ein zusätzlicher Vorteil der erfindungsgemäßen Heuwerbungsmaschinen ist ihr günstig gelegener Maschinenschwerpunkt beim Transport. Er befindet sich nahe der Schleppervorderachse, da einige Baugruppen bis über die Vorderräder des Schleppers 1 verschwenkt werden, was aus Fig. 2 deutlich wird.

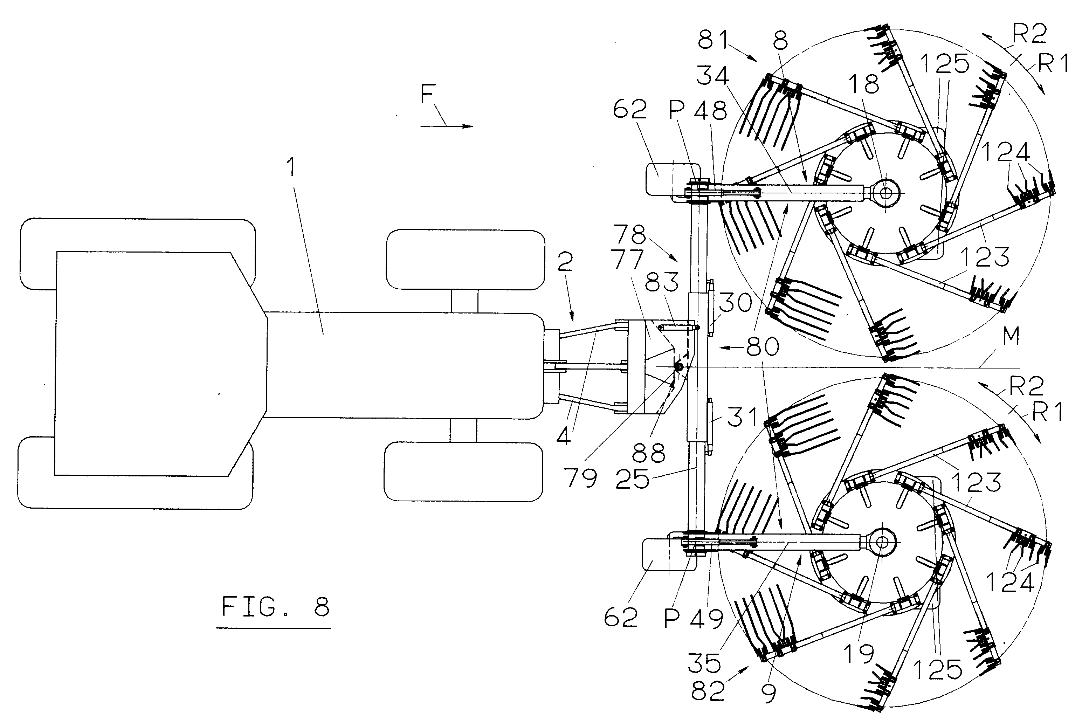

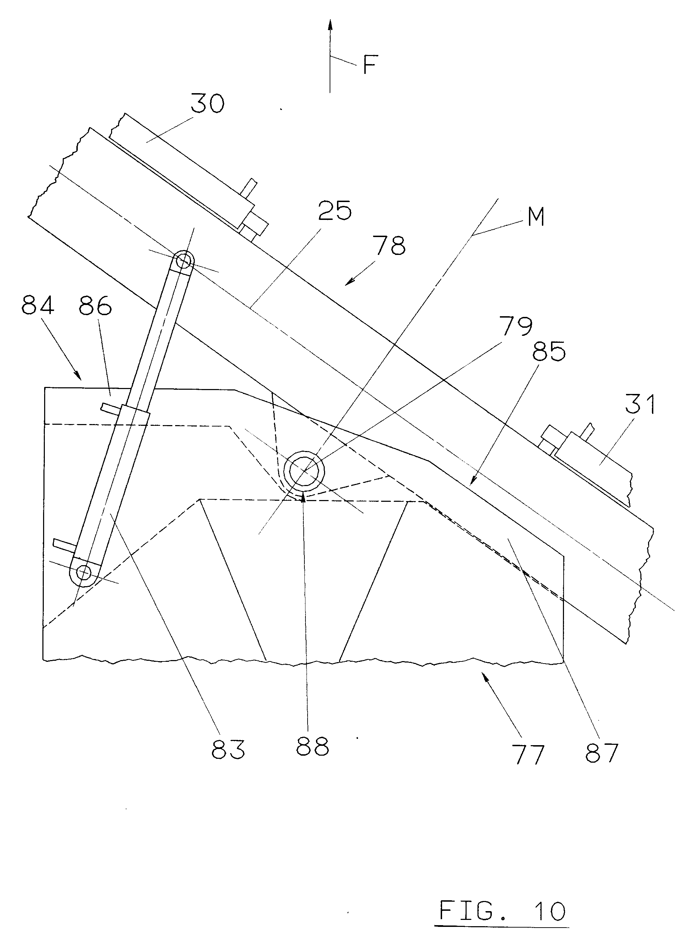

Eine noch universeller einsetzbare Schwadmaschine ist als weiteres Ausführungsbeispiel der Erfindung in den Fig. 8 - 10 schematisch verdeutlicht.
Ein Tragrahmen 77 ist wie der weiter oben beschriebene Tragrahmen 3 an der Dreipunkthebevorrichtung 2 eines Schleppers 1 anbaubar. Am Tragrahmen 77 ist ein Querholm 78 der Schwadmaschine um eine etwa vertikale Achse 79 verschwenkbar gelagert. Schwenkbewegungen des gesamten Maschinenrahmens 80 mit daran gehalterten Rechkreiseln 81, 82 können zwischen zwei Anschlagpositionen stattfinden. Sie werden durch eine mit der Schlepperhydraulik gekoppelte und über ein Ventil ansteuerbare Kolben-Zylinderanordnung 83 erzeugt. Die Anschlagpositionen werden von zwei Anschlägen 84, 85 des Tragrahmens 77 für den damit gelenkig verbundenen Querholm 78 definiert. Die Anschläge 84, 85 sind so ausgebildet, daß der Querholm 78 in jeder der beiden Anschlagpositionen an einer ihm zugewandten Fläche des Tragrahmens 77 anliegt und auch von Laschen 86, 87 teilweise über- bzw . untergriffen wird. Die Gelenkigkeit des Maschinenrahmens 80 relativ zum Tragrahmen 77 um die Achse 79 ist gegeben, indem beide Baugruppen durch eine Bolzen-Buchsen-Verbindung 88 gekoppelt sind. Die weitere Ausführung des Maschinenrahmens 80 ist annähernd gleich der Ausführung des Maschinenrahmens 7 im ersten Ausführungsbeispiel, wobei gleiche Bauelemente bzw. Baugruppen auch mit gleichen Bezugszeichen versehen sind.

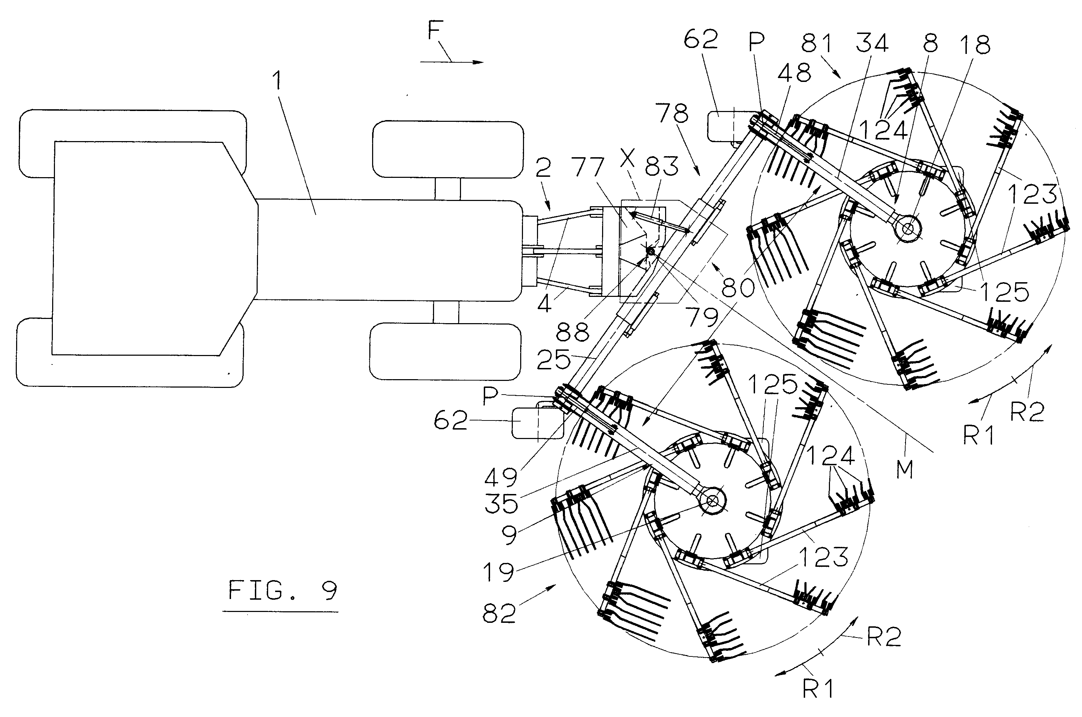

Die Schwadmaschine mit dem so gestalteten Maschinenrahmen 80 am Tragrahmen 77 kann entweder mit quer zur Fahrtrichtung F ausgerichtetem Querholm 78 betrieben oder transportiert werden oder auch mit schräg gestelltem Maschinenrahmen 80 arbeiten. Aus der in Fig. 8 dargestellten Stellung ist der Maschinenrahmen 80 um 30 Grad bis 50 Grad im Uhrzeigersinn um die Achse 79 verschwenkbar, wobei dieser mögliche Schwenkwinkel von den Anschlägen 84, 85 begrenzt wird und auch im Ausführungsbeispiel 35 Grad beträgt. Bei anderer Ausführung des Tragrahmens 77 wäre auch ein Verschwenken in entgegengesetzter Uhrzeigerrichtung möglich. Ziel des Verschwenkens des Maschinenrahmens 80 um die Achse 79 ist es, zu erreichen, daß sich die Arbeitsflächen beider Rechkreisel 81, 82 bei Sicht in Fahrtrichtung F überlappen. Somit ist es möglich, in der in Fig. 9 dargestellten Stellung der Schwadmaschine das von dem Rechkreisel 81 zusammengeharkte Erntegut gemeinsam mit weiterem auf der Feldfläche liegendem Erntegut zu übernehmen und als einen Seitenschwad abzulegen. Voraussetzung dafür ist, daß zumindest die nach Fig. 8 zur Ablage eines Mittelschwades vorgesehene Drehrichtung R1 des Rechkreisel 82 umkehrbar ist und dieser dann mit der Drehrichtung R2 rotiert. Dies ist in getriebetechnisch bekannter Weise entweder möglich durch Veränderung der Antriebsverbindung im Bereich des Punktes P, indem sich die Achse 25 des Querholmes 78 mit der Achse 35 des Tragholmes 9 schneidet oder aber auch direkt am Getriebe des Rechkreisels 82. Wird das Getriebe 20, das bei dieser Ausführung der Schwadmaschine durch eine Weitwinkelgelenkwelle mit der Zapfwelle des Schleppers 1 zu verbinden ist, zusätzlich so als Schaltgetriebe gestaltet, daß auch die Drehrichtung R1, R2 beider Rechkreisel 81, 82 gleichzeitig umkehrbar ist, sind folgende Arbeitsvarianten mit der Schwadmaschine möglich:
- in der in Fig. 8 dargestellten Maschinenstellung
   O Ablage eines Mittelschwades mit einstellbarer Schwadbreite (Rechkr. 81: Drehricht. R1; Rechkr 82: Drehricht. R2);
   O nach außen Schwaden von Erntegut (Rechkr. 81 Drehricht. R2; Rechkr. 82: Drehricht. R1);
   O Ablage von zwei Einzelschwaden mit variabler Arbeitsbreite (Rechkr. 81: Drehricht. R1; Rechkr. 82: Drehricht. R1 oder Rechkr. 81: Drehricht. R2; Rechkr. 82: Drehricht. R2);
- in der in Fig. 9 dargestellten Maschinenstellung
   o Ablage eines Seitenschwades (Rechkr. 81: Drehricht. R1; Rechkr. 82: Drehricht. R1).

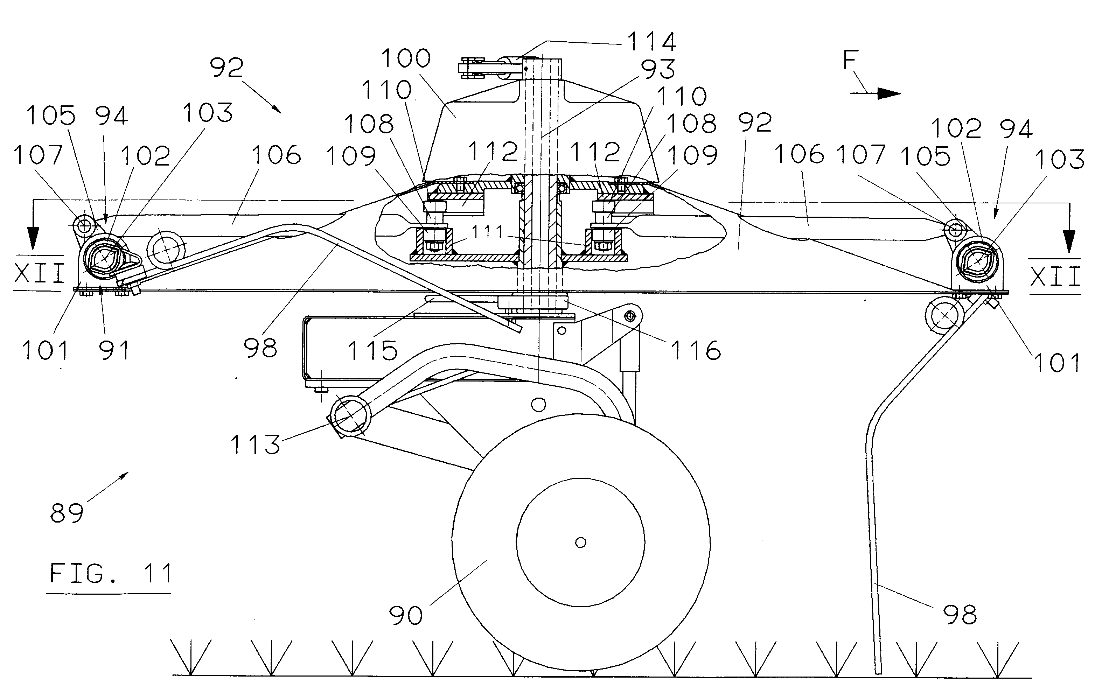

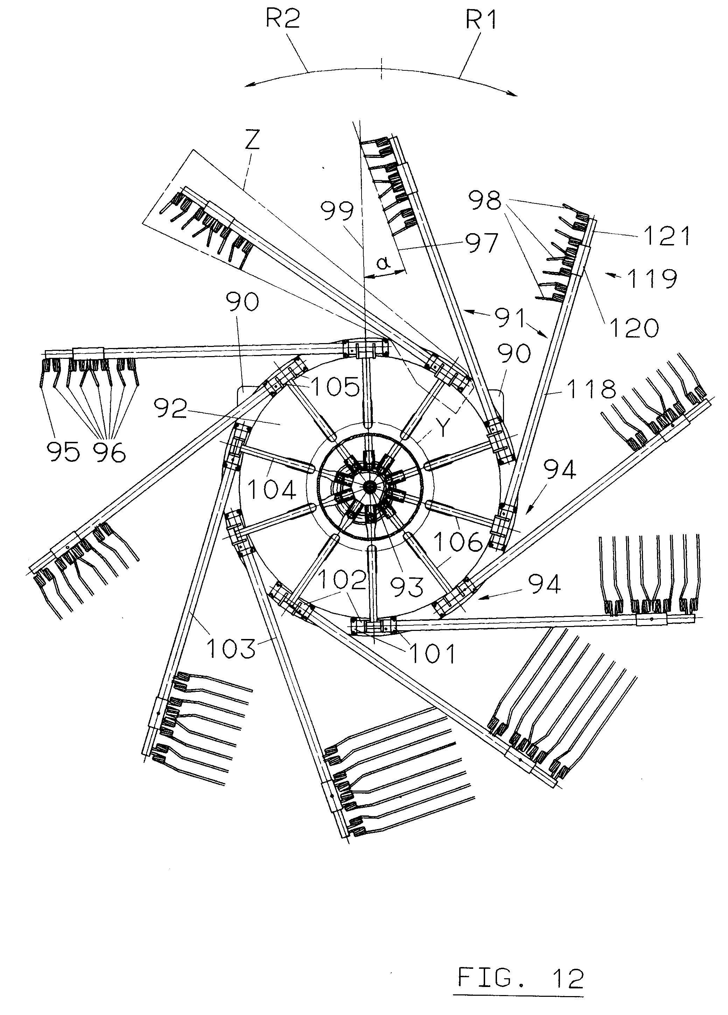

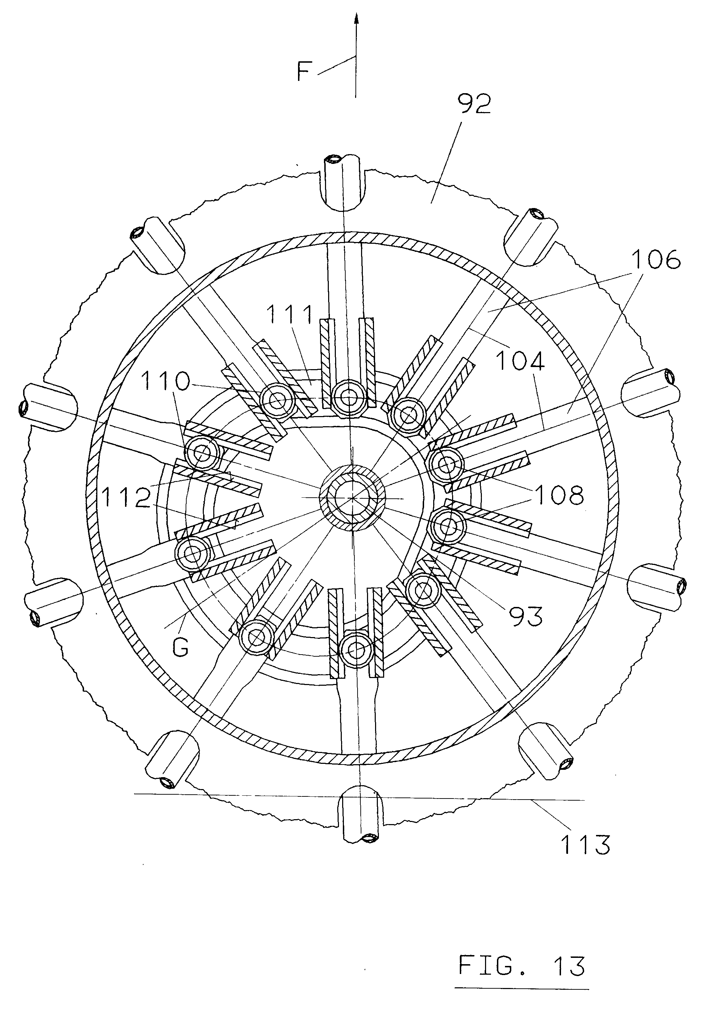

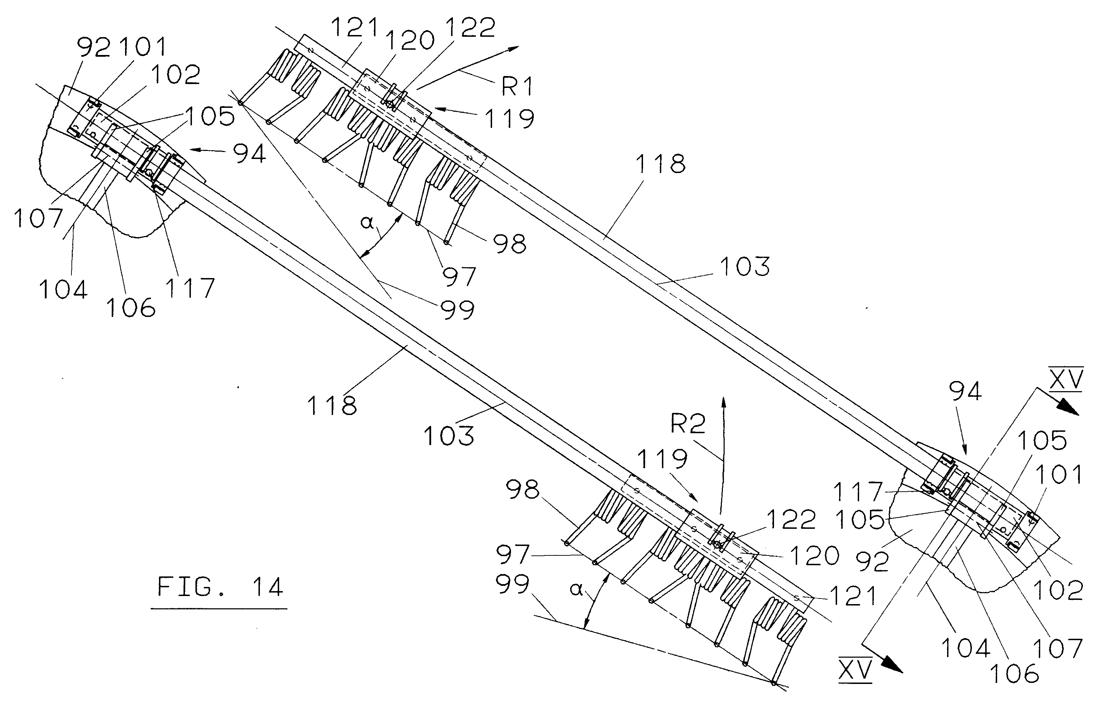

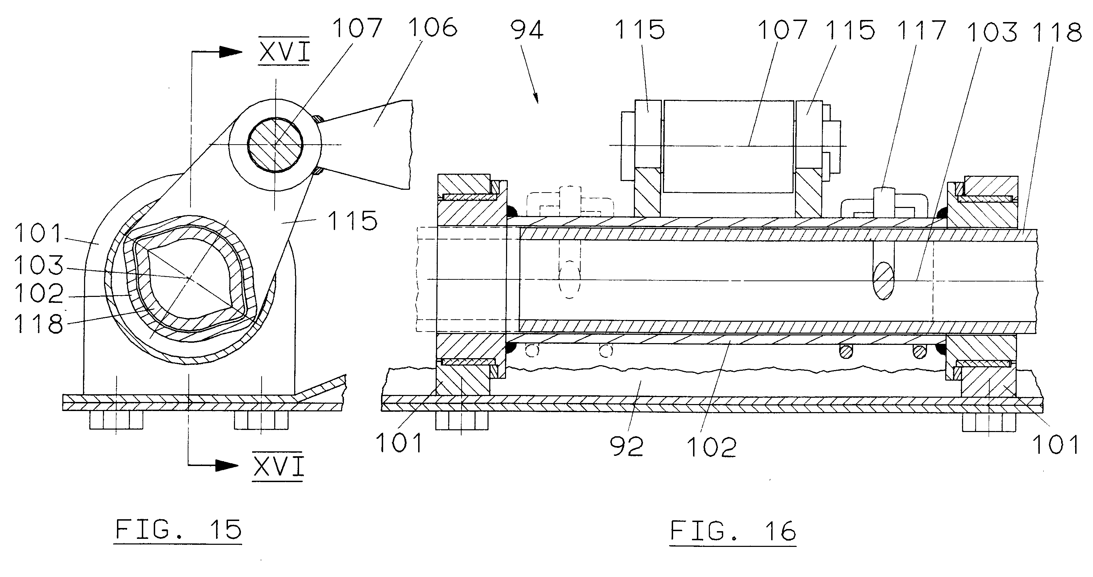

Um mit den Rechkreiseln 81, 82 in beiden möglichen Drehrichtungen R1, R2 bei gleich guter Arbeitsqualität arbeiten zu können, weisen auch diese Rechkreisel 81, 82 erfindungswesentliche Besonderheiten auf, die im Folgenden beschrieben werden. Diese Beschreibung erfolgt unter Bezugnahme auf die Fig. 11 - 16, wobei hier ein Rechkreisel 89 etwas anderer Ausführung dargestellt ist.

Der dargestellte, sich über höhenverstellbare Stützräder 90 zum Erdboden abstützende Rechkreisel 89 weist Zinkenarme 91 auf, die tangential an einem Kreiselrad 92 gelagert sind und gemeinsam mit diesem im Betrieb um eine etwa vertikale Achse 93 rotieren. Es sind dazu lösbare Verbindungen 94 zwischen den Zinkenarmen 91 und dem Kreiselrad 92 vorgesehen. Der Durchmesser des Kreiselrades 92 und die Länge der Zinkenarme 91 wurden so gewählt, daß eine Zinkenspitzen 95, 96 verbindende Gerade 97 in Rechposition der Zinken 98 mit einer Geraden 99 durch die äußerste Zinkenspitze 95 und die Achse 93 in einer horizontalen Ebene einen Winkel α von 20 Grad einschließt. Je nach Fahrgeschwindigkeit, mit der eine Heuwerbungsmaschine, die mit dem Rechkreisel 89 ausgerüstet ist, bewegt wird, und je nach der Umfangsgeschwindigkeit der Zinken 98 um die Achse 93 wird durch die Zinken 98 die größtmögliche Fläche bei einem Winkel α zwischen 10 Grad und 30 Grad überstrichen. Bei einer solchen Zinkenanordnung liegt eine sehr gute Arbeitsqualität vor.
Der Rechkreisel 98 besteht aus einem Getriebe 100, über das der Antrieb des Kreiselrades 92 von einer Antriebsquelle her erfolgt und an dem auch Rahmenteile zur Abstützung des Rechkreisels 89 anbaubar sind. In der Antriebsverbindung zwischen der Antriebsquelle, beispielsweise einem landwirtschaftlichen Zugfahrzeug, und dem Getriebe 100 ist ein Zwischengetriebe vorzusehen, an dem durch einen Schaltvorgang die Drehrichtung R1, R2 des Kreiselrades 92 gewechselt werden kann.
Am Umfangsrand des Kreiselrades 92 sind Stehlager 101 aufgeschraubt, wobei jeweils zwei Stehlager 101 ein Schwenkrohr 102 abstützen, in das jeweils ein Zinkenarm 91 einführbar und arretierbar ist. Durch die Art der Gestaltung der lösbaren Verbindungen 94 wird abgesichert, daß die tangential ausgerichteten Zinkenarme 91 innerhalb des Schwenkrohres 102 nicht verschieblich oder verdrehbar sind. Die Schwenkrohre 102 mit den Zinkenarmen 91 sind begrenzt um Längsachsen 103 der Zinkenarme 91 verschwenkbar. Dazu sind jeweils symmetrisch zu einer gedachten radialen Linie 104 des Kreiselrades 92, welche rechtwinklig zu der Längsachse 103 durch die Achse 93 verläuft (im folgenden nur mit Radiale 104 bezeichnet), Hebel 105 an den Schwenkrohren 102 verschweißt. Die Schwenkrohre 102 selbst sowie die sie abstützenden Stehlager 101 sind ebenfalls symmetrisch zu den Radialen 104 gestaltet bzw. angeordnet. Die mit den Zinken 98 besetzten Enden der Zinkenarme 91 weisen entgegen der Drehrichtung R1, R2 des Kreiselrades 92 tangential von diesem weg. An den Hebeln 105 sind Steuerstangen 106 einseitig so gelagert, daß sie um Achsen 107 verschwenkbar sind, die parallel zu den Längsachsen 103 der Zinkenarme 91 ausgerichtet sind. Anderenendes sind die Steuerstangen 106 mit Zapfen 108 verbunden.
Unterhalb der Steuerstangen 106 befindet sich je eine Rolle 109 auf dem Zapfen 108 und oberhalb eine Rolle 110. Die Rolle 110 läuft in einer Kurvenbahn 111, welche durch ein nach oben offenes in verschiedenem Abstand um die Achse 93 angeordnetes U-Profil gebildet wird und keine Drehbewegung um die Achse 93 ausführt.
Die Rollen 110 bewegen sich in jeweils einer Führungsbahn 112, wobei die Führungsbahnen 112 mit dem Kreiselrad 92 in Verbindung stehen und gemeinsam mit diesem um die Achse 93 rotieren. Die Führungsbahnen 112 sind symmetrisch zu den Radialen 104 gestaltet und angeordnet, wodurch erreicht wird, daß auch die Steuerstangen 106 und die Zapfen 108 mit den Rollen 109, 110 ständig symmetrisch zu den Radialen 15 ausgerichtet sind.
Dadurch, daß die Rollen 109 in der Kurvenbahn 111 geführt werden, ist der Abstand der Zapfen 108 von der Achse 93 veränderlich, und die Rollen 110 werden in den Führungsbahnen 112 hin- und herbewegt. Auch die Steuerstangen 106 vollziehen diese Bewegungen mit und bewirken ein begrenztes Verdrehen der Schwenkrohre 102 mit den Zinkenarmen 91 um die Längsachsen 103, wobei die Zinken 98 abwechselnd aus ihrer Rechposition heraus in eine ausgehobene Position oder umgekehrt bewegt werden.
Die Kurvenbahn 111 ist so gestaltet, daß sich ständig die Zinken 98 von vier Zinkenarmen 91 in einer Rechposition befinden. Des weiteren ist die Kurvenbahn 111 symmetrisch zu einer horizontalen, die Achse 93 schneidenden Geraden G gestaltet, so daß die Bewegung der Zinken 98 in die Rechposition und aus der Rechposition in umgekehrt gleicher Weise erfolgt.

Die Ausrichtung der Kurvenbahn 111 zur Fahrtrichtung F wird in Abhängigkeit von der Stellung einer Querachse 113 der Halterung der Stützräder 90, die über eine Kolben-Zylinderanordnung 114 immer quer zur Fahrtrichtung F ausgerichtet wird, gesteuert. Zusätzlich ist diese Ausrichtung über einen Hebel 115 und ein Feststellstück 116 feingradig veränderbar und festlegbar.
Über den Hebel 115 ist festlegbar, wann die Zinken 98 ihre Rechposition während ihrer Drehbewegung um die Achse 93 einnehmen, indem die Kurvenbahn 111, nach Lösen des Feststellstücks 116 von der Halterung der Stützräder 90, gemeinsam mit dem Hebel 115 begrenzt um die Achse 93 verschwenkbar ist.
Um bei einer Umkehrung der Drehrichtung R1, R2 des Kreiselrades 92 gleiche Arbeitsverhältnisse und eine gleiche Arbeitsqualität wie bei der ursprünglichen Drehrichtung R2, R1 zu erreichen, sind die Verbindungen 94 zwischen den Zinkenarmen 91 und den Schwenkrohren 102 am Kreiselrad 92 lösbar und die Zinkenarme 91 zweiteilig ausgeführt. Nach Umschalten am Zwischengetriebe und Lösen von Verbindungsstiften 117, welche die Zinkenarme 91 in den Schwenkrohren 102 sichern, sind die Zinkenarme 91 aus den Schwenkrohren 102 herauszuziehen und von der anderen Seite wieder in die Schwenkrohre 102 einzustecken und zu sichern. Damit sind die Längsachsen 103 wieder tangential ausgerichtet und, die Zinkenarme 91 weisen entgegen der neu vorgewählten Drehrichtung R1, R2 vom Kreiselrad 92 weg.

Die Zinkenarme 91 bestehen aus Zwischenstücken 118, die im Schwenkrohr 102 wie beschrieben gehaltert werden und aus Zinkenhalteteilen 119, die wiederum lösbar mit den Zwischenstücken 118 verbunden sind.
Die Zinkenhalteteile 119 bestehen aus einem Profilrohr 120, an dem eine Schiene 121 gehaltert, beispielsweise verschweißt ist, woran sich die Zinken 98 abstützen. Auch das Zwischenstück 118 ist vorzugsweise aus Profilrohr gefertigt, wodurch erreichbar ist, daß kein Verdrehen des Zwischenstücks 118 im Schwenkrohr 102 und des Profilrohrs 120 auf dem Zwischenstück 118 um die Längsachse 103 erfolgen kann. Das im Ausführungsbeispiel verwendete Rohr für die Schwenkrohre 102, die Zwischenstücke 118 und die Profilrohre 120 weist ein Zitronenprofil (Gelenkwellenprofil) auf, dessen Verwendung sich besonders gut eignet. Das Profilrohr 120 wird auf dem Zwischenstück 118 durch einen weiteren Verbindungsstift 122 (im Beispiel ein Klappsplint) gesichert und bei Drehrichtungswechsel des Kreiselrades 92 immer so auf das Zwischenstück 118 aufgesteckt, daß die Zinkenspitzen 95, 96 der Längsachse 103 nacheilen, die Zinken 98 also vom jeweiligen Zinkenarm 91 gezogen werden. Die Zinkenarme 91 mit den Zinken 98 sind also so wahlweise spiegelbildlich zu der Radialen 104 am Kreiselrad 92 zu haltern, daß bei beiden möglichen Drehrichtungen R1, R2 des Kreiselrades 92 gleiche Verhältnisse vorliegen, nur die Seite, auf die das Halm- oder Blattgut abgelegt wird, wechselt. Dadurch, daß auch alle Bauteile zur Zinkensteuerung symmetrisch zu der Radialen 104 angeordnet sind und die Kurvenbahn 111 symmetrisch ist, sind auch beim Drehrichtungswechsel analoge Verhältnisse, die Bewegung der Zinken 98 betreffend, gegeben.
Die Zinkenarme 91 des Rechkreisels 89 könnten auch anders gestaltet sein. Beispielsweise könnten zwei Sätze einteiliger Zinkenarme mit gezogenen Zinken Verwendung finden, wobei entweder ein Satz für Linksdrehung oder ein Satz für Rechtsdrehung des Kreiselrades 92 durch die lösbaren Verbindungen 94 an diesem zu haltern ist. Es besteht ebenfalls die Möglichkeit der Verwendung von Zinkenarmen mit vertikalen Zinken, die dann nur entsprechend der vorgewählten Drehrichtung R1 oder R2 am Kreiselrad 92 zu haltern wären. Diese Zinken weisen aber ihre Federwirkung betreffende Nachteile auf.

Es wurde so ein Rechkreisel 89 für eine Heuwerbungsmaschine, beispielsweise eine Schwadmaschine geschaffen, durch den wahlweise ohne Verluste bei der Arbeitsqualität Halm- bzw. Blattgut nach links oder nach rechts geschwadet werden kann.
Die Rechkreisel 81, 82 der Schwadmaschine nach den Fig. 8 - 10 sind funktionell wie der beschriebene Rechkreisel 89 gestaltet. Sie sind im Unterschied zum Rechkreisel 89 nur mit jeweils acht Zinkenarmen 123 ausgerüstet und an den Zinkenarmen 123 sind nur drei Doppelzinken 124 gehaltert. Des weiteren sind die Rechkreisel 81, 82 nicht mit Kolben-Zylinderanordnungen 114 ausgerüstet, sondern die für die jeweils eingenommene Betriebsstellung richtige Einstellung der Kurvenbahnen und der Halterungen von Stützrädern 125 in Bezug auf die Fahrtrichtung F wird von Hand vorgenommen. Da dies nur einmalig vor Arbeitsbeginn erforderlich ist, ist der Aufwand für den Schlepperfahrer vertretbar.
Bei der Schwadmaschine nach den Fig. 8 - 10 sind auch keine technischen Mittel zum Verdrehen der Rechkreisel 81, 82 um die Achsen 34, 35 der Tragholme 8, 9 vorgesehen. Soll die Schwadmaschine in die Transportstellung gebracht werden, ist der Maschinenrahmen 80 durch Betätigen der Kolben-Zylinderanordnung 83 so um die Achse 79 zu verschwenken, daß der Querholm 78 quer zur Fahrtrichtung F ausgerichtet ist. Anschließend werden die Tragholme 8, 9 gemeinsam mit den Rechkreiseln 81, 82 um die Achse 25 des Querholmes 78 nach oben verschwenkt, bis die Achsen 34, 35 der Tragholme 8, 9 etwa senkrecht stehen. Dann sind die Rechkreisel 81, 82 von Hand um die Achsen 34, 35 zu verdrehen, bis die Spitzen der Doppelzinken 124 in Richtung der vertikalen Maschinenmittelebene weisen und in dieser Position zu sichern.
Ist dies erfolgt, kann ein gefahrloser Straßentransport erfolgen, wobei vorher die Tragholme 8, 9 auch noch etwas weiter in Richtung des Schleppers 1 um die Achse 25 verschwenkt werden können, um den Schwerpunkt der Schwadmaschine noch weiter in Richtung Schlepper 1 zu verlagern.

Auch die Rechkreisel 10, 11 der Heuwerbungsmaschine nach den Fig. 1 -7 können nach Art des Rechkreisels 89 gestaltet sein. Dann wären auch diese Rechkreisel 10, 11 bei entsprechender Antriebsgestaltung in beiden Drehrichtungen R1, R2 einsetzbar, wobei aber nicht die Möglichkeit der Ablage eines Seitenschwades besteht.

Insgesamt sind die im Frontanbau zu betreibenden und zu transportierenden Heuwerbungsmaschinen bei sehr guter Arbeitsqualität und Bodenanpassungsfähigkeit der Rechkreisel 10, 11; 81, 82 zu betreiben, wobei besonders vorteilhaft ist, daß eine große Arbeitsbreite vorliegt und kein Erntegut vom Schlepper 1 überfahren wird. Die Maschinen sind gefahrlos auf der Straße transportierbar. Der neue zur Anwendung kommende Rechkreisel 89 gewährleistet die universelle Einsetzbarkeit der Heuwerbungsmaschinen.

## Patentansprüche

1. Heuwerbungsmaschine, insbesondere Schwadmaschine, zum Frontanbau an einen Schlepper (1), mit einem an einer Dreipunkthebevorrichtung (2) des Schleppers (1) gehalterten Tragrahmen (3; 77) für einen mit Stützrädern (60, 62; 125) versehenen Maschinenrahmen (7; 80), wobei der Maschinenrahmen (7; 80) relativ zum Schlepper (1) begrenzt schwenkbeweglich um in Fahrtrichtung (F) oder in und quer zur Fahrtrichtung (F) gelegene horizontale Achsen ist, sowie gemeinsam mit zumindest einem, am Maschinenrahmen (7; 80) gelagerten, in Arbeitslage um eine etwa vertikale Achse (18, 19) umlaufenden Rechkreisel (10, 11; 81, 82) aus der Arbeitslage in eine Transportlage überführbar ist, dadurch gekennzeichnet, daß der Maschinenrahmen (7; 80) aus einem mit dem Tragrahmen (3; 77) verbundenen Querholm (6; 78) und aus endseitig am Querholm (6; 78) gelagerten, in der Arbeitslage nach vorne weisenden Tragholmen (8, 9; 67) besteht, wobei an den Tragholmen (8, 9; 67) jeweils ein Gehäuse (12, 13) eines Rechkreisels (10, 11; 81, 82) fest gehaltert ist, die Rechkreisel (10, 11; 81, 82) zur Erreichung ihrer Bodenanpassung und der Transportlage gemeinsam mit den Tragholmen (8, 9; 67) oder Teilen von ihnen um eine quer zur Fahrtrichtung (F) verlaufende horizontale Achse (25) des Querholmes (6; 78) verschwenkbar und um je eine etwa in Fahrtrichtung (F) verlaufende Achse (34, 35) der Tragholme (8, 9; 67) derart verdrehbar sind, daß die Tragholme (8, 9; 67) und ihre Achsen (34, 35) in Transportlage der Heuwerbungsmaschine senkrecht oder leicht in Richtung Schlepper 1 geneigt stehen und freie Enden von Rechzinken (16, 17; 124) in Richtung der Maschinenmitte (M) weisen.

2. Heuwerbungsmaschine nach Anspruch 1, dadurch gekennzeichnet, daß die Tragholme (8, 9; 67) symmetrisch zur Maschinenmitte (M) außen an den Querholmenden gelagert sind und sich die in Fahrtrichtung (F) gelegenen Achsen (34, 35) der Tragholme (8, 9; 67) mit der quer zur Fahrtrichtung (F) gelegenen horizontalen Achse (25) des Querholmes (6; 78) in Punkten (P) schneiden.

3. Heuwerbungsmaschine nach den Ansprüchen 1 und 2, dadurch gekennzeichnet, daß sich die Gehäuse (12, 13) der Rechkreisel (10, 11; 81, 82) innerhalb der Umlaufbahnen der Rechzinken (16, 17; 124) und der Querholm (6; 78) oder die querholmnahen Enden der Tragholme (8, 9) in Arbeitslage der Heuwerbungsmaschine auf sich selbsttätig der Fahrtrichtung (F) anpassenden und in der Stützhöhe einstellbaren Stützrädern (60, 62; 125) zum Erdboden hin abstützen.

4. Heuwerbungsmaschine nach zumindest einem der Ansprüche 1 bis 3, dadurch gekennzeichnet, daß die Länge des Querholmes (6; 78) durch eine Verstellvorrichtung veränderbar und festlegbar ist, wobei gleichzeitig der Abstand der Tragholme (8, 9; 67) und der Rechkreisel (10, 11; 81, 82) von der Maschinenmitte (M) einzeln veränderbar und festlegbar ist.

5. Heuwerbungsmaschine nach zumindest einem der Ansprüche 1 bis 5, dadurch gekennzeichnet, daß in den Querholm (6; 78) ein mit der Zapfwelle des Schleppers (1) verbindbares Getriebe (20) und gemeinsam mit dem Querholm (6; 78) längenveränderliche Wellen (24, 32) integriert sind, wobei die Wellen (24, 32) koaxial zu der quer zur Fahrtrichtung (F) gelegenen Achse (25) des Querholms (6; 78) gelagert sind und daß in den Tragholmen (8, 9; 67) Antriebswellen (43, 44) koaxial zu den im Betrieb nach vorne weisenden Achsen (34, 35) gelagert sind, die die Rechkreisel (10, 11; 81, 82) antreiben und über Kegelradverzahnungen (46, 47), deren Verzahnungsmittelpunkte auf den Punkten (P) liegen, mit den im Querholm (6, 78) gelegenen Wellen in Eingriff stehen.

6. Heuwerbungsmaschine nach zumindest einem der Ansprüche 1 bis 6, gekennzeichnet durch Eckteile (66) des Maschinenrahmens (7; 80), die Verbindungs- und Gelenkteile zwischen dem Querholm (6) und den Tragholmen (67) sind, oder durch zweiteilige Tragholme (8, 9), wobei jeweils erste Teile (52, 53) um die Achse (25) des Querholmes (6; 78) verschwenkbar an diesen gelagert sind und zweite Teile (54, 55) um die Achsen (34, 35) der Tragholme (8, 9) verdrehbar an den ersten Teilen (52, 53) gelagert sind.

7. Heuwerbungsmaschine nach zumindest einem der Ansprüche 1 bis 6, dadurch gekennzeichnet, daß die Schwenkbewegung der Tragholme (8, 9; 67) und der daran gehalterten Rechkreisel (10, 11; 81, 82) um die Achse (25) des Querholmes (6; 78) durch die Kraft von mit der Hydraulikanlage des Schleppers (1) verbundenen und über Ventile ansteuerbaren Kolben-Zylinderanordnungen (48, 49, 70) erfolgt, wobei diese zwischen Haltern (50, 68) des Querholmes (6; 78) und den Eckteilen (66) oder den ersten Teilen (52, 53) der Tragholme (8, 9) schwenkbeweglich gehaltert sind und ihre Kraftrichtungslinien ständig außerhalb der von den Achsen (25, 34, 35) gebildeten Ebenen liegen.

8. Heuwerbungsmaschine nach zumindest einem der Ansprüche 1 bis 7, dadurch gekennzeichnet, daß der Maschinenrahmen (80) und die daran gehalterten Rechkreisel (81, 82) begrenzt um eine etwa vertikale Achse (79) verschwenkbar am Tragrahmen (77) gelagert sind.

9. Heuwerbungsmaschine nach Anspruch 8, dadurch gekennzeichnet, daß Schwenkbewegungen des Maschinenrahmens (80) mit den daran gehalterten Rechkreiseln (81, 82) um etwa 30 bis 50 Grad zwischen zwei Anschlagpositionen um die annähernd vertikale Achse (79) erfolgen können.

10. Heuwerbungsmaschine nach einem der Ansprüche 8 oder 9, dadurch gekennzeichnet, daß durch Anschläge (84, 85) am Tragrahmen (77) für den damit gelenkig verbundenen Maschinenrahmen (80) die Anschlagpositionen definiert werden, in denen die annähernd horizontale Achse (25) des Querholmes (78) in einer Grundposition etwa quer zur Fahrtrichtung (F) oder um etwa 30 bis 50 Grad aus dieser Grundposition verschwenkt ausgerichtet ist.

11. Heuwerbungsmaschine nach zumindest einem der Ansprüche 8 bis 10, dadurch gekennzeichnet, daß Schwenkbewegungen des Maschinenrahmens (80) um die etwa vertikale Achse (79) durch die Kraft einer mit der Hydraulikanlage des Schleppers (1) verbundenen und über ein Ventil ansteuerbaren Kolben-Zylinderanordnung (83) erfolgen können, wobei diese Kolben-Zylinderanordnung (83) im Abstand zu der vertikalen Achse (79) einerseits gelenkig am Tragrahmen (77) und andererseits gelenkig am Querholm (78) befestigt ist.

12. Heuwerbungsmaschine nach zumindest einem der Ansprüche 1 bis 11, dadurch gekennzeichnet, daß die Drehrichtung (R1, R2) zumindest eines der Rechkreisel (10, 11; 81, 82) durch einen Schaltvorgang an der Antriebsverbindung zu diesem Rechkreisel (10, 11; 81, 82) umkehrbar ist.

13. Heuwerbungsmaschine nach Anspruch 12, dadurch gekennzeichnet, daß zumindest der in seiner Drehrichtung (R1, R2) umkehrbare Rechkreisel (81, 82; 89) mit einem um eine aufrechte Achse (18, 19; 93) drehbarem Kreiselrad (92), dessen Antrieb von der Zapfwelle des Schleppers (1) aus erfolgt und mit etwa horizontal angeordneten Zinkenarmen (91; 123) ausgerüstet ist, die zur Erzeugung von Arbeitsbewegungen um ihre Längsachsen (103) an einer begrenzt um die Achse (18, 19; 93) verschwenkbaren Kurvenbahn (111) geführt und annähernd tangential zum Kreiselrad (92) ausgerichtet, endseitig derart an diesem nach Drehrichtungsvorwahl mittels lösbarer Verbindungen (94) zu lagern sind, daß ihre freien, mit Zinken (98; 124) besetzten Enden den lösbaren Verbindungen (94) am Kreiselrad (92) im Betrieb nacheilen, wobei den Zinkenarmen (91; 123) im Bereich ihrer Lagerorte am Kreiselrad (92) bei ihrer Drehbewegung um die Achse (18, 19; 93) ein Drehmoment zur Erreichung ihrer Arbeits- bzw. Schwenkbewegung um ihre Längsachsen (103) erteilt wird.

14. Heuwerbungsmaschinen nach einem der Ansprüche 12 oder 13, dadurch gekennzeichnet, daß Schwenkrohre (102) zur Aufnahme der Zinkenarme (91; 123) an dem in seiner Drehrichtung (R1, R2) umkehrbaren Kreiselrad (92) um die annähernd tangentialen Längsachsen (103) der Zinkenarme (91; 123) verschwenkbar gelagert sind, wobei ihre Schwenkbewegungen von der jeweiligen Stellung zur Kurvenbahn (111) bestimmt werden und sie symmetrisch zu Radialen (104), welche rechtwinklig zu den Längsachsen (103) durch die Achse (18, 19; 93) verlaufen, angeordnet sind.

15. Heuwerbungsmaschine nach zumindest einem der Ansprüche 12 bis 14, dadurch gekennzeichnet, daß die Zinkenarme (91; 123) in einem solchen radialen Abstand zur Achse (18, 19; 93) durch die lösbaren Verbindungen (94) an dem in seiner Drehrichtung (R1, R2) umkehrbaren Kreiselrad (92) gelagert sind, daß der horizontale Winkel (α) zwischen einer die Zinkenspitzen (95, 96) verbindenden Geraden (97) und einer die Achse (18, 19; 93) und die äußerste Zinkenspitze (95) schneidenden Geraden (99) 10 Grad bis 30 Grad, vorzugsweise 20 Grad beträgt, wenn sich die Zinken (98; 124) in ihrer Rechposition befinden.

16. Heuwerbungsmaschine nach zumindest einem der Ansprüche 12 bis 15, dadurch gekennzeichnet, daß bei dem in seiner Drehrichtung (R1, R2) umkehrbaren Rechkreisel (81, 82; 89) symmetrisch zu den Radialen (104) Hebel (105) an den Schwenkrohren (102), jeweils eine Steuerstange (106) und ein Zapfen (108) vorgesehen sind, wobei die Steuerstange (106) und der Zapfen (108) Verbindungsglieder zwischen den Hebeln (105) und zugehörigen Rollen (109) in der Kurvenbahn (111) sind.

17. Heuwerbungsmaschine nach zumindest einem der Ansprüche 12 bis 16, gekennzeichnet durch Rollen (110) auf den oberen Enden der Zapfen (108), die radial beweglich in jeweils symmetrisch zu den Radialen (104) angeordneten Führungsbahnen (112) an dem in seiner Drehrichtung (R1, R2) umkehrbaren Kreiselrad (92) gehaltert sind.

18. Heuwerbungsmaschine nach zumindest einem der Ansprüche 12 bis 17, dadurch gekennzeichnet, daß die Zinkenarme (91; 123) des in seiner Drehrichtung (R1, R2) umkehrbaren Rechkreisels (81, 82; 89) zweiteilig ausgeführt sind, wobei jeweils ein Zwischenstück (118) endseitig lösbar im Schwenkrohr (102) zu haltern ist und an dem dann noch freien Ende des Zwischenstücks (118) ein Zinkenhalteteil (119) lösbar jeweils so zu befestigen ist, daß die Zinkenspitzen (95, 96) den Längsachsen (103) der Zinkenarme (91; 123) nacheilen und Federspeicher der Zinken (98; 124) nur in Rollrichtung ihrer Windungen belastet werden.

19. Heuwerbungsmaschine nach zumindest einem der Ansprüche 8 bis 18, dadurch gekennzeichnet, daß Kurvenbahnen beider Rechkreisel (81, 82) um zumindest 30 bis 50 Grad um die Achsen (18, 19) der jeweils zugehörigen Rechkreisel (81, 82) verschwenkbar und in verschiedenen Positionen arretierbar sind, wobei die Stellung der Kurvenbahnen insbesondere der vorgewählten Stellung des Maschinenrahmens (80) relativ zur Fahrtrichtung (F) anpaßbar ist.
